Europäisches Patentamt

European Patent Office

Office européen des brevets

(11) Veröffentlichungsnummer : **0 355 632 B1**

(12) **EUROPÄISCHE PATENTSCHRIFT**

(45) Veröffentlichungstag der Patentschrift :
**20.05.92 Patentblatt 92/21**

(21) Anmeldenummer : **89114936.1**

(22) Anmeldetag : **11.08.89**

(51) Int. Cl.⁵ : **B23H 1/10,** B01D 65/02

(54) Verfahren zum Aufbereiten der Bearbeitungsflüssigkeit einer Elektroerosionsmaschine.

(30) Priorität : **19.08.88 DE 3828236**

(43) Veröffentlichungstag der Anmeldung :
**28.02.90 Patentblatt 90/09**

(45) Bekanntmachung des Hinweises auf die
Patenterteilung :
**20.05.92 Patentblatt 92/21**

(84) Benannte Vertragsstaaten :
**CH DE FR GB IT LI LU SE**

(56) Entgegenhaltungen :
**DE-A- 3 727 275**

(73) Patentinhaber : **AG für industrielle Elektronik
AGIE Losone bei Locarno
CH-6616 Losone/Locarno (CH)**

(72) Erfinder : **Budin, Josef
Via Cadogno 3
CH-6648 Minusio (CH)**
Erfinder : **Kutil, Hugo
Zypressenstrasse 17
CH-8408 Winterthur (CH)**
Erfinder : **Levy, Gideon, dr.
Via Locarno 52
CH-6616 Losone (CH)**

(74) Vertreter : **EGLI-EUROPEAN PATENT
ATTORNEYS
Widenmayerstrasse 5
W-8000 München 22 (DE)**

## Beschreibung

Die vorliegende Erfindung betrifft eine Vorrichtung zum Aufbereiten der Bearbeitungsflüssigkeit einer Elektroerosionsmaschine nach dem Oberbegriff des Patentanspruchs 1.

Elektroerosionsmaschinen haben einen mit einer Bearbeitungsflüssigkeit gefüllten Arbeitsbehälter, in dem ein mittels einer Elektroerosion zu bearbeitendes Werkstück eingetaucht ist. Die Bearbeitungsflüssigkeit besteht bei sogenannten Drahtschneidemaschinen oder Drahterosionsmaschinen aus deionisiertem Wasser, während sie bei Senkmaschinen aus Kohlenwasserstoffen besteht. Durch das erosive Abtragen von Partikeln aus dem Werkstück vermindert sich die Reinheit der Bearbeitungsflüssigkeit, wodurch sich auch deren elektrische Leitfähigkeit ändert. Um eine gewünschte Qualität der Erosionsbearbeitung aufrechtzuerhalten, ist es nötig, die Bearbeitungsflüssigkeit zu reinigen, um deren elektrische Eigenschaften - und deren Reinheit in vorbestimmten Bereichen zu halten.

Allgemein werden im Stand der Technik zur Aufbereitung der Bearbeitungsflüssigkeit konventionelle Filter eingesetzt, die einen vergleichsweise großen Porendurchmesser haben. Bei großen Porenabmessungen derartiger konventioneller Filter ist die Filterwirkung nicht ausreichend, um die Qualität der Bearbeitungsflüssigkeit einer Elektroerosionsmaschine über eine Zeitdauer von mehreren Tagen in einem gewünschten Qualitätsbereich zu Malten. Ein Herabsetzen der Porendurchmesser der konventionellen Filter zur Steigerung der Filtrationsqualität führt andererseits zu einem Zusetzen der Filterwandungen.

Aus der Druckschrift DE 3727275 A1 ist eine Vorrichtung der eingangs genannten Art bekannt. Bei dieser Vorrichtung wird die Bearbeitungsflüssigkeit in einem Kreislauf von einem Absetztank mittels einer Pumpe durch ein eine Filtermembran aufweisendes Querstromfilter und von diesem zurück in den Absetztank geführt. Die gereinigte Bearbeitungsflüssigkeit, also der Permeat, gelangt in einen Saubertank, von dem aus er über eine weitere Pumpe dem Arbeitsbereich einer Funkenerosionsmaschine zugeführt wird. In dieser Druckschrift ist auch darauf hingewiesen, daß das Querstromfilter durch Rückspülung gereinigt werden kann, indem von der Austrittsseite des Permeats her unter Druck Permeat in das Querstromfilter eingebracht wird, wodurch die Poren der Filtermembran gereinigt werden können. Aus den Poren herausgedrücktes Partikelmaterial gelangt dann erneut in den Konzentratstrom. Bei dieser bekannten Vorrichtung besteht die Gefahr, daß die Poren des Querstromfilters schnell zugesetzt werden, so daß der Filtrierwirkungsgrad gering ist. Auch wenn durch eine Rückspülung die Poren der Filtermembran immer wieder gereinigt werden, so steht während dieses Reinigungsvorganges das Querstromfilter nicht zur Reinigung der Bearbeitungsflüssigkeit zur Verfügung, wodurch der Filtrierwirkungsgrad nachteilig beeinträchtigt wird.

Bei der Aufbereitung von Bearbeitungsflüssigkeit bei Elektroerosionsmaschinen werden Membranfilter auch für andere Zwecke eingesetzt. So ist beispielsweise aus der JP-OS 62-24917 eine Vorrichtung zum Aufbereiten der Bearbeitungsflüssigkeit einer Elektroerosionsmaschine bekannt, bei der ein Membranfilter eingesetzt wird. Die bekannte Vorrichtung umfaßt einen Behälter für die Bearbeitungsflüssigkeit, der durch eine aus Cellophan bestehende Membran in zwei Bereiche unterteilt ist. Ein erster Bereich steht über eine Pumpe, der ein konventioneller Filter nachgeschaltet ist, mit dem Arbeitsbereich der Elektroerosionsmaschine in Verbindung, der mittels einer weiteren Pumpe wieder in diesen ersten Bereich des Behälters entleerbar ist. Der zweite Bereich des Behälters ist über eine weitere Pumpe an einen Ionentauscher angeschlossen. Die Ionenkonzentration in dem zweiten Behälterbereich liegt um Größenordnungen unter der Ionenkonzentration im ersten Behälterbereich, so daß der Ionentauscher mit einer für sein Betriebsverhalten günstigen, niedrigen Ionendichte betrieben werden kann. Bei dieser bekannten Vorrichtung zum Aufbereiten der Bearbeitungsflüssigkeit dient zum Filtern des Konzentrates also ein konventioneller Filter, während ein Membranfilter lediglich zur einstellbaren Reduktion der Ionendichte für einen Kreislauf eines Ionentauschers eingesetzt wird.

Gegenüber diesem Stand der Technik liegt der vorliegenden Erfindung die Aufgabe zugrunde, eine Vorrichtung zum Aufbearbeiten der Bearbeitungsflüssigkeit einer Elektroerosionsmaschine so weiterzubilden, daß eine hohe Qualität der Bearbeitungsflüssigkeit für die Elektroerosionsbearbeitung über eine lange Zeitdauer aufrechterhalten werden kann.

Diese Aufgabe wird bei einer Vorrichtung der im Oberbegriff des Patentanspruchs 1 genannten Art durch die im kennzeichnenden Teil des Patentanspruchs 1 genannten Merkmale gelöst.

Der Erfindung liegt die Erkenntnis zugrunde, daß ein Membranfilter dann für die Zwecke der Filterung des Permeatstromes einer Elektroerosionsmaschine eingesetzt werden kann, wenn der Membranfilter nicht nur in der sogenannten Querstromtechnik betrieben wird, bei der sich der Konzentratstrom im wesentlichen parallel zur Membrane bewegt, sondern wenn ferner die Strömungsrichtung des Konzentratstromes periodisch umgeschaltet wird. Wenn sich nämlich der Konzentratstrom ständig in der gleichen Richtung entlang der Filtermembrane bewegt, so baut sich auf der Strömungseingangsseite der Membran ein aus den Feststoffteilen des Konzentrates bestehender Schmutzkuchen auf, der die Leistungsfähigkeit der Membran erheblich herabsetzt. Dieser Schmutzkuchen baut sich primär von der Eingangsseite her auf. Dies wird dadurch bewegt, daß man längs des Membranfilters einen immer stärkeren Druckabfall feststellt.

Bislang hatte man davon abgesehen, Membranfilter für die direkte Filterung des Konzentratstromes im Bereich der Elektroerosionstechnik einzusetzen, da Fachleute Membranfilter wegen des beschriebenen schnellen Nachlassens der Leistungsfähigkeit aufgrund des sich aufbauenden Schmutzkuchens für die Elektroerosionstechnik für ungeeignet angesehen haben.

Erfindungsgemäß wird die Strömungsrichtung des Konzentratstromes periodisch automatisch umgeschaltet. Bei einer Umkehr der Konzentratströmungsrichtung wird der Schmutzkuchen, der sich im Bereich der Konzentratstromeingangsseite an der Membran aufgebaut hat, von dieser abgeschwemmt. Auf diese Weise kann ein Zusetzen des Membranfilters durch periodisches Umkehren der Strömungsrichtung verhindert oder erheblich verzögert werden.

Das Abschwemmen bzw. das Abtragen der Schmutzkuchens läßt sich dadurch weiter verbessern, daß in zeitlicher Abstimmung mit der Strömungsrichtungsumkehr auch ein Rückspülen des Membranfilters durchgeführt wird. Zweckmäßigerweise wird zuerst das Rückspülen eingeleitet, wobei während dieses Vorganges die Pumpe für den Konzentratstrom abgeschaltet ist. Unmittelbar nach Beendigung des Rückspulvorganges wird diese Pumpe wieder eingeschaltet. Vorteilhaft erfolgt dabei durch Ventilbetätigung auch die Strömungsrichtungsumkehr, d.h. der Konzentratstrom läuft dann in entgegengesetzter Richtung bezogen auf die Richtung vor dem Rückspulen. Da sich in dieser Phase eine sehr hohe Schmutzpartikelkonzentration im "Schmutzkreislauf" einstellt, ist es zweckmäßig, in dieser Phase eine verstärkte Entsorgung des Schmutzkreislaufes von Schmutzpartikeln vorzusehen. Zu diesem Zweck ist vorgesehen, daß zumindest ein größerer Teilstrom des Schmutzkreislaufes in dieser Phase über ein Vliesfilter geleitet wird.

Bevorzugte Weiterbildungen und Ausgestaltungen der erfindungsgemäßen Vorrichtung sind Gegenstand der Unteransprüche. Bevorzugte Ausführungsformen der Erfindung werden nachfolgend unter Bezugnahme auf die beiliegenden Zeichnungen näher erläutert.

Es zeigt:

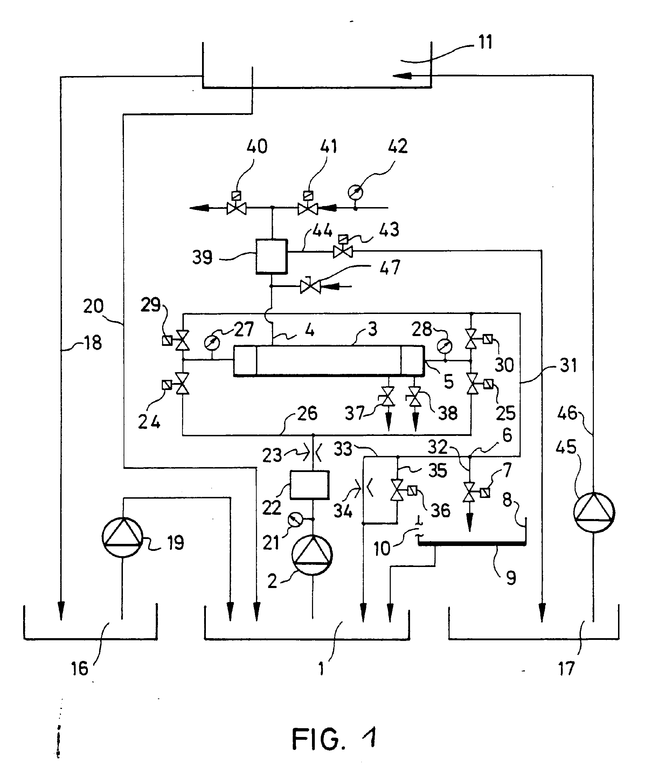

Fig. 1 eine Gesamtdarstellung einer Vorrichtung zum Aufbereiten der Bearbeitungsflüssigkeit einer Elektroerosionsmaschine gemäß der vorliegenden Erfindung.

Fig. 2 eine Schnittdarstellung durch einen Membranfilter, wie er bei einer Vorrichtung gemäß Fig. 1 zum Einsatz kommt.

Wie nachfolgend noch näher erläutert werden wird, beinhaltet eine Vorrichtung zum Aufbereiten der Bearbeitungsflüssigkeit einer Erosionsmaschine ein Konzentratbekken 1. Von dem Konzentratbecken wird mittels einer Pumpe 2 ein Konzentratstrom zu einem Membranfilter 3 gefördert, von dem ein Permeat an einem Permeatausgang 4 abgeleitet wird. Von einem Filterausgang 5 wird der nach der Abzweigung des Permeates mit Feststoffen weiter angereicherte Konzentratstrom zu dem Konzentratbecken 1 zurückgeleitet. Ein Teilstrom des rückgeleiteten Konzentratstromes wird hinter einer Verzweigung durch ein elektrisch betätigbares Teilstromventil 7 zu einem Entsorgungsbehälter 8 zugeführt. Der Entsorgungsbehälter 8 ist als Siebkorb ausgeführt, in den ein Vliesfilter eingelegt ist. Der Entsorgungsbehälter 8 ist oberhalb des Konzentratbeckens 1 angeordnet, so daß der Teilstrom des Konzentrates, der den Vliesfilter 9 des Entsorgungsbehälters 8 durchlaufen hat, in das Konzentratbecken 1 zurückgeführt wird.

Im Laufe des Filterbetriebes baut sich oberhalb der Oberfläche des Vliesfilters 9 ein Filterkuchen auf, der aus den akkumulierten Feststoffen besteht, die aus dem Konzentrat abgeschieden werden. Dieser Filterkuchen bewirkt eine Verstärkung der Filterwirkung des Vliesfilters 9.

Der Entsorgungsbehälter 8 ist mit einem Überlauf 10 versehen, der in Überströmen des Konzentrates von dem Entsorgungsbehälter 8 in das Konzentratbecken 1 gestattet, wenn der dem Entsorgungsbehälter 8 zugeführte Konzentratteilstrom größer ist als die vorgereinigte Konzentratmenge, die den Filterkuchen und den Vliesfilter 9 durchsikkert.

Durch geeignete Steuerung des Teilstromventils 7 werden dem Entsorgungsbehälter 8 entweder periodisch und diskontinuierlich größere Teilstrommengen pro Zeiteinheit zugeleitet oder konstant eine kleinere Teilstrommenge zugeführt.

Der Membranfilter 3 hat eine Struktur mit einer röhrenförmigen Membran 12, die einen Konzentratbereich 13 von einem Permeatbereich 14 trennt. Der Membranfilter 3 ist von einer zylindrischen Wand 15 umschlossen. Die Konzentratströmung durch den Konzentratbereich 13 wird von einem Konzentrateinlaß zu einem Konzentratauslaß parallel zur Membran 12 geführt. In der zeichnerischen Darstellung ist ein einziger Membranfilter 3 gezeigt. In einer praktisch realisierten, bevorzugten Ausführungsform sind jedoch eine Vielzahl von identischen Filterelementen 3 strömungsmäßig in Parallelschaltung vorgesehen. Durch - diese Ausgestaltung des Membranfilters als Gruppe einer Vielzahl von rohrförmigen Filterelementen kann eine hohe Filterfläche bei geringem Raumbedarf erzielt werden

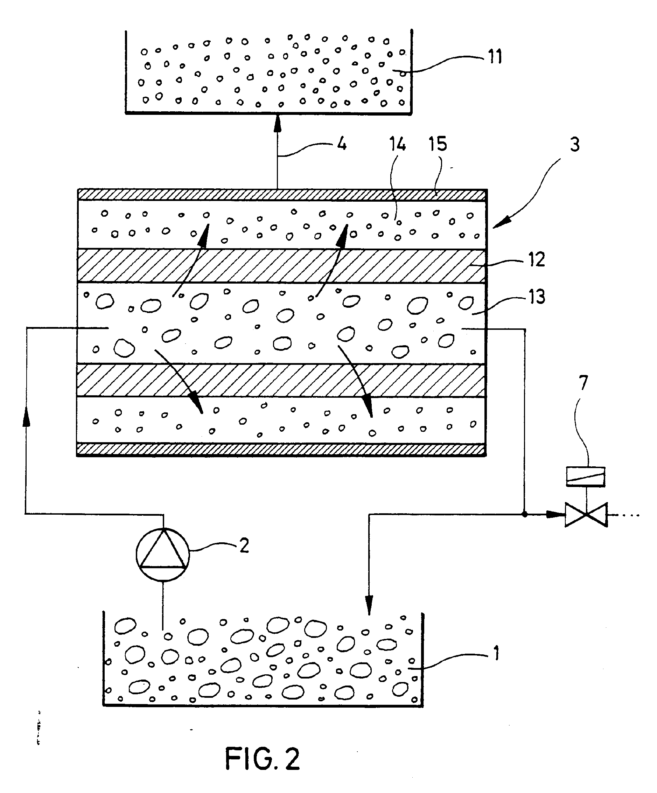

Vorzugsweise besteht der Membranfilter 3 aus Hohlfasern, die aus Polypropylen bestehen und einen Durchmesser von ungefähr 1,5 mm und eine Porengröße von ungefähr 0,2 um haben. Wie in Fig. 2 zu sehen ist, steht der Membranfilter 3 mit seinem Permeatausgang 4 mit einem Permeatbehälter bzw. Saubertank 17 in Verbindung, von welchem aus das Permeat zu einem Arbeitsbehälter der Funkenerosionsmaschine gepumpt wird.

Die Vorrichtung zum Aufbereiten der Bearbeitungsflüssigkeit umfaßt neben dem Arbeitsbehälter 11 und dem Konzentratbecken 1 einen Auffangbehälter 16 und einen Saubertank 17. Der Inhalt des Arbeitsbehälters 11 kann dem Auffangbehälter 16 über eine Entleerungsleitung 18 zugeführt werden. Mittels einer zweiten Pumpe 19 kann der Inhalt des Auffangbehälters 16 nach Sedimentation des Konzentrates in das Konzentratbecken 1 umgepumpt werden. Ferner steht der Arbeitsbehälter 11 über eine Rückflußleitung 20 direkt mit dem Konzentratbecken 1 in Verbindung. Hinter der ersten Pumpe 2 liegt ein Druckmesser 21, ein Grobfilter 22 sowie eine Blende 23, hinter der sich eine Zuflußleitung 26 teilt und zu zwei Eingangsventilen 24, 25 läuft. Das erste Eingangsventil 24 ist mit dem Membranfilter 3 auf einer Seite verbunden, während das andere Eingangsventil 25 mit dem Membranfilter 3 auf der anderen Seite verbunden ist. Der jeweilige Druck vor bzw. hinter dem Membranfilter 3 wird durch einen zweiten und dritten Druckmesser 27, 28 überwacht. Ferner sind an den Konzentratbereich 13 des Membranfilters 3 neben den Eingangsventilen 24, 25 Ausgangsventile 29, 30 angeschlossen, die über eine Konzentratrückführleitung 31 mit dem Konzentratbecken 1 in Verbindung stehen. Die Konzentratrückführleitung 31 teilt sich an dem Teilstromventil 7 in eine Entsorgungsbehälterleitung 32, in eine eine Blende 34 aufweisende Blendenleitung 33, die im Konzentratbecken 1 mündet, und in eine Druckentlastungsleitung 35, die ein schmutzseitiges Druckentlastungsventil 36 aufweist und sich gleichfalls zum Konzentratbecken 1 hin erstreckt. Die Eingangsventile 24, 25 und die Ausgangsventile 29, 30 werden derart angesteuert, daß bei Öffnung des Eingangsventiles 24 das weitere Eingangsventil 25 geschlossen ist, während das Ausgangsventil 30 geöffnet ist und das dem ersten Eingangsventil 24 zugewandte Ausgangsventil 29 geschlossen ist. Durch diese Ventil-Öffnungs- und Schließ-Kombination wird eine Strömungsrichtung festgelegt, die in der bildlichen Darstellung gemäß Fig. 3 von links nach rechts verläuft. Eine Umkehr der Strömungsrichtung durch das Membranfilter kann herbeigeführt werden, indem das Eingangsventil 25 und das Ausgangsventil 29 geöffnet werden, während das Eingangsventil 24 und das Ausgangsventil 30 geschlossen werden. Der Membranfilter 3 ist mit seinem Permeatausgang 4 an einen Pufferbehälter 39 für das Rückspülen des Membranfilters 3 angeschlossen. Der Pufferbehälter 39 ist über ein Entlüftungsventil 40 entlüftbar und kann zum Zwecke der Abreinigung des Membranfilters 3 durch ein Druckluftventil 41 mit einer Druckluft beaufschlagt werden, deren Druck durch einen vierten Druckmesser 42 überwacht werden kann.

Der Pufferbehälter 39 steht über eine Rückflußleitung 44, die ein Rückflußventil 43 aufweist, mit dem Saubertank 17 in Verbindung. Das im Saubertank 17 akkumulierte Permeat wird über eine dritte Pumpe 45 mittels einer Permeatleitung 46 in den Arbeitsbehälter 11 rückgeführt. Diese Rückführung des Permeates in den Arbeitsbehälter geschieht vorzugsweise mit einer Förderleistung von ungefähr 50 bis 60 l pro min.

Die oben beschriebene Umschaltung der Strömungsrichtung durch entsprechende Betätigung der Eingangsventile 24, 25 und der Ausgangsventile 29, 30 wird nur bei abgeschalteter Pumpe 2 vorgenommen, um zu verhindern, daß Druckschläge beim Schalten der Ventile 24, 25, 29, 30 auf die Membrane einwirken. Daher schaltet ein Prozeßrechner zum Ansteuern aller beschriebener Ventile und Pumpen zunächst die Pumpe 2 aus, bevor die Ventilumschaltung durchgeführt wird. Anschließend wird die Pumpe 2 erneut eingeschaltet, wodurch die Strömungsrichtung umgekehrt ist. Die nunmehr entgegengesetzt verlaufende Strömungsrichtung des Konzentratstromes führt zu einem Abschwemmen des Schmutzfilterkuchens, der sich an der Konzentratströmungseingangsseite der Membran des Membranfilters 3 aufgebaut hat.

Um konstante Druckverhältnisse am Eintritt und am Austritt der Membran zu gewährleisten und um ein Absinken der Filtrationsleistung über die Zeit zu vermeiden, wird die Konzentratströmungsrichtung periodisch automatisch umgeschaltet.

Vorzugsweise hängt die Frequenz der Richtungsumkehr des Konzentratstromes von der Einschaltzeitdauer bzw. Einschaltfrequenz der Pumpe 2 ab.

Die Häufigkeit der Umschaltung der Strömungsrichtung kann von einem Prozeßrechner bestimmt werden, und zwar in Abhängigkeit von einem Parameter der Elektroerosion vorzugsweise von dem Integral über den Brennstrom. Zusätzlich können noch Abhängigkeiten vom Werkstückmaterial, der Partikelzusammensetzung und vorbestimmter Technologiedaten, bzw. Generatordaten des Generators der Elektroerosionsmaschine berücksichtigt werden. Diese zusätzlichen Parameter neben dem Integral über den Brennstrom können bei einem vorbestimmten Stromintegral durch einfache Versuche ohne weiteres festgelegt werden.

## Patentansprüche

1. Vorrichtung zum Aufbereiten der Bearbeitungsflüssigkeit einer Elektroerosionsmaschine mit einem Membranfilter (3), durch den als Konzentratstrom zu reinigende Bearbeitungsflüssigkeit im wesentlichen parallel zur Membran zu führen ist,
dadurch gekennzeichnet,
daß eine Umschaltvorrichtung vorgesehen ist, mit der die Strömungsrichtung des Konzentratstromes durch den Membranfilter (3) umkehrbar ist, und daß die Umschaltvorrichtung zwei Paare von Ventilen (24,29; 25, 30) aufweist, von denen jeweils ein Paar von Ventilen (24,29; 25,30) an je einen konzentratseitigen Anschluß des Membranfilters (3) angeschlossen und je ein Ventil (24, 25) eines Paares an eine Konzentratzuflußleitung (26) und das andere (29, 30) an eine Konzentratrückführleitung (31) angeschlossen ist.

2. Vorrichtung nach Anspruch 1,
dadurch gekennzeichnet,
daß eine Pumpe (2) für den Konzentratstrom durch die Umschaltvorrichtung derart ansteuerbar ist, daß eine Umschaltung der Ventile (24,29; 25,30) bei abgeschalteter Pumpe (2) erfolgt.

3. Vorrichtung nach einem der Ansprüche 1 oder 2,
dadurch gekennzeichnet,
daß eine Rückspülvorrichtung (39, 43, 44) vorgesehen ist, mittels der Permeat durch den Permeatausgang (4) durch die Membran zur Konzentratseite des Membranfilters (3) drückbar ist, wobei diese Rückspülvorrichtung in zeitlichem Zusammenhang mit einer Betätigung der Umschaltvorrichtung aktivierbar ist.

4. Vorrichtung nach einem der Ansprüche 1 bis 3,
dadurch gekennzeichnet,
daß die Frequenz der Strömungsrichtungsumkehr durch die Umschaltvorrichtung in Abhängigkeit von der Einschaltfrequenz oder Einschaltdauer der Pumpe (2) für den Konzentratstrom steuerbar ist.

5. Vorrichtung nach einem der Ansprüche 1 bis 4,
dadurch gekennzeichnet,
daß die Frequenz der Strömungsrichtungsumkehr in Abhängigkeit von einem Parameter des Elektroerosionsprozesses änderbar ist.

6. Vorrichtung nach einem der Ansprüche 1 bis 5,
dadurch gekennzeichnet,
daß die Frequenz der Strömungsrichtungsumkehr in Abhängigkeit von einem Druckabfall längs des Membranfilters änderbar ist.

## Revendications

1. Dispositif de traitement du liquide d'usinage d'une machine d'électro-érosion, avec un filtre à membrane (3), à travers lequel un liquide d'usinage, qui doit être nettoyé, est conduit sous forme de courant de liquide concentré sensiblement parallèlement à la membrane,
caractérisé en ce
qu'il comprend un dispositif de commutation/inversion, grâce auquel le sens de circulation du flux de liquide concentré à travers le filtre à membrane (3) peut être inversé, et en ce que le dispositif d'inversion présente deux paires de vannes (24, 29; 25, 30), dont chaque paire de vannes ou valves ou soupapes (24, 29; 25, 30) est reliée à un raccord du filtre à membrane 3 du côté du liquide concentré, une vanne (24, 25) de chaque paire étant reliée à une conduite (26) d'alimentation en liquide concentré, l'autre vanne (29, 30) de chaque paire étant reliée à une conduite (31) de retour de liquide concentré.

2. Dispositif selon la revendication 1,
caractérisé en ce
qu'il comprend une pompe (2) assurant la circulation du liquide concentré dans le dispositif de commutation que l'on peut commander, de telle sorte qu'une commutation des vannes (24, 29; 25, 30) s'effectue lors de l'arrêt de la pompe (2).

3. Dispositif selon la revendication 1 ou 2,
caractérisé en ce
qu'il comprend un dispositif de lavage à contre-courant (39, 43, 44) grâce auquel le perméat peut être refoulé par la sortie de perméat (4) à travers la membrane vers le côté de liquide concentré du filtre à membrane (3), ce dispositif de lavage à contre-courant étant activable en fonction du moment d'action sur le dispositif de commutation.

4. Dispositif selon l'une des revendications 1 à 3,
caractérisé en ce
que la fréquence des commutations ou inversions du sens de circulation du courant par le dispositif de commutation peut être commandée en fonction du temps ou de la fréquence de démarrage de la pompe (2) de circulation du liquide concentré.

5. Dispositif selon l'une des revendications 1 à 4,
caractérisé en ce
que la fréquence d'inversion du sens de circulation du courant peut être modifiée en fonction d'un paramètre du processus d'électro-érosion.

6. Dispositif selon l'une des revendications 1 à 5,
caractérisé en ce
que la fréquence d'inversion du sens de circulation du courant peut être modifiée en fonction de la chute de pression le long du filtre à membrane.

## Claims

1. Device for the treatment of the machining liquid of an electroerosion machine, having a diaphragm-type filter (3) through which machining liquid to be cleaned is guided substantially parallel to the diaphragm as a flow of concentrate,
characterised in that
in that a reversal device is provided, by means of which the direction of flow of the flow of concentrate through the diaphragm-type filter (3) can be reversed, and in that the reversal device has two pairs of valves (24, 29; 25, 30), each of which pairs of valves (24, 29; 25, 30) is connected to a respective connection of the diaphragm-type filter (3) on the concentrate side, and one valve (24, 25) of each pair is connected to a concentrate inflow line (26) and the other (29, 30) is connected to a concentrate return line (31).

2. Device according to Claim 1,
characterised in that
a pump (2) for the flow of concentrate can be triggered by the reversal device such that the valves (24, 29; 25, 30) are reversed when the pump (2) is switched off.

3. Device according to one of Claims 1 or 2,
characterised in that
a flushing-back device (39, 43, 44) is provided, by means of which the permeate can be pressed through the permeate outlet (4) through the diaphragm to the concentrate side of the diaphragm-type filter (3), this flushing-back device being activatable in timed relationship with an actuation of the reversal device.

4. Device according to one of Claims 1 to 3,
characterised in that
the frequency of the reversal of the direction of flow can be controlled by the reversal device as a function of the operating frequency or operating time of the pump (2) for the flow of concentrate.

5. Device according to one of Claims 1 to 4,
characterized in that
the frequency of the reversal of the direction of flow is alterable as a function of a parameter of the electroerosion process.

6. Device according to one of Claims 1 to 5,
characterised in that
the frequency of the reversal of the direction of flow is alterable as a function of a pressure drop along the diaphragm-type filter.

FIG. 1

FIG. 2